# EUROPÄISCHE PATENTSCHRIFT

(11) **EP 3 523 154 B1**
(45) Veröffentlichungstag und Bekanntmachung des Hinweises auf die Patenterteilung: **25.08.2021**
(21) Anmeldenummer: 17784926.2
(22) Anmeldetag: 06.10.2017
(51) Int. Cl.: B60K 15/03

(54) **VERSTEIFUNGSELEMENT FÜR EINEN FLÜSSIGKEITSBEHÄLTER FÜR EIN KRAFTFAHRZEUG UND FLÜSSIGKEITSBEHÄLTER FÜR EIN KRAFTFAHRZEUG MIT EINEM VERSTEIFUNGSELEMENT**
STIFFENING ELEMENT FOR A LIQUID CONTAINER FOR A MOTOR VEHICLE AND LIQUID CONTAINER FOR A MOTOR VEHICLE WITH A STIFFENING ELEMENT
ÉLÉMENT DE RENFORCEMENT POUR UN CONTENANT À LIQUIDE DESTINÉ À UN VÉHICULE AUTOMOBILE ET CONTENANT À LIQUIDE POUR UN VÉHICULE AUTOMOBILE COMPRENANT UN ÉLÉMENT DE RENFORCEMENT

(30) Priorität: 07.10.2016 DE 102016219539
(43) Veröffentlichungstag der Anmeldung: 14.08.2019
(73) Patentinhaber: Kautex Textron GmbH & Co. KG, 53229 Bonn (DE)
(72) Erfinder: GEBERT, Klaus, 47877 Willich (DE); QUANT, Frank, 53117 Bonn (DE); MARX, Daniel, 50181 Bedburg (DE); LORENZ, Harald, 53474 Bad Neuenahr-Ahrweiler (DE); VAN MEGERN, Andre, 50937 Köln (DE)
(74) Vertreter: Richly & Ritschel Patentanwälte PartG mbB
(86) Internationale Anmeldenummer: PCT/EP2017/075549
(87) Internationale Veröffentlichungsnummer: WO 2018/065605

(56) Entgegenhaltungen:
- EP-A1- 2 823 979
- EP-A1- 2 865 553
- DE-A1-102013 018 922

## Beschreibung

Die Erfindung betrifft ein Versteifungselement für einen Flüssigkeitsbehälter für ein Kraftfahrzeug und einen Flüssigkeitsbehälter für ein Kraftfahrzeug mit einem solchen Versteifungselement.

Versteifungselemente für Flüssigkeitsbehälter dienen dazu, den Flüssigkeitsbehälter unter statischen und dynamischen Betriebslasten in einem Kraftfahrzeug in Form zu halten und auszusteifen. Insbesondere bei Flüssigkeitsbehältern, die aus zwei Halbschalen zusammengesetzt sind, dienen Versteifungselemente dazu, den Behälter strukturell zu verstärken. Dabei besteht einerseits die Forderung, dass die Versteifungselemente möglichst leicht bauen sollen, um das Gewicht des Flüssigkeitsbehälters insgesamt gering zu halten. Weiter soll eine zuverlässige Verbindung zwischen dem Versteifungselement und in der Regel mehrschichtig ausgeführten Innenwandungen des Behälters hergestellt werden.

Im Stand der Technik ist aus der EP 2 823 979 A1 ein Zuganker für einen Kunststofftank bekannt, wobei der Zuganker stirnseitige Endflächen aus Kunststoff aufweist und zwischen den stirnseitigen Endflächen einen Mittelteil aus einem Metall aufweist.
Der vorliegenden Erfindung liegt die technische Problemstellung zugrunde, ein verbessertes Versteifungselement für einen Flüssigkeitsbehälter für ein Kraftfahrzeug anzugeben. Weiter soll ein Flüssigkeitsbehälter für ein Kraftfahrzeug mit einem Versteifungselement angegeben werden.

Die voranstehend beschriebene technische Problemstellung wird gelöst durch ein Versteifungselement nach Anspruch 1 und einen Flüssigkeitsbehälter nach Anspruch 15. Weitere Ausgestaltungen der Erfindung ergeben sich aus den abhängigen Ansprüchen und der nachstehenden Beschreibung.

Gemäß einem ersten Aspekt betrifft die Erfindung ein Versteifungselement für einen Flüssigkeitsbehälter für ein Kraftfahrzeug, mit wenigstens einem Verbindungsabschnitt zum Verbinden des Versteifungselements mit dem Flüssigkeitsbehälter für ein Kraftfahrzeug, wobei der Verbindungsabschnitt wenigstens einen ersten und einen zweiten Steg aus einem ersten Material aufweist, die von einem zweiten Material zumindest abschnittsweise umschlossen sind, wobei das zweite Material Durchgangsöffnungen der Stege durchdringt.

Bei dem Flüssigkeitsbehälter kann es sich beispielsweise um einen Kraftstofftank handeln.

Bei dem Flüssigkeitsbehälter kann es sich um einen Behälter zur Bevorratung von Harnstofflösung für einen SCR-Katalysator handeln.

Der Flüssigkeitsbehälter kann ein Behälter zur Bevorratung von Kühlflüssigkeit sein, beispielsweise zur Kühlung eines Motors oder einer Batterie.

Der Flüssigkeitsbehälter kann einen mehrschichtigen Wandungsaufbau aufweisen. So kann ein Sandwich- bzw. Schichtaufbau einer Wandung des Flüssigkeitsbehälters eine Schicht aufweisen, die eine Diffusionsbarriere für eine zu bevorratende Flüssigkeit darstellt. Eine solche Diffusionsbarriere kann beispielsweise von wenigstens zwei weiteren Schichten zweiseitig eingefasst sein.

Die Zwei-Komponenten-Bauweise ermöglicht eine abschnittsweise Optimierung des Versteifungselements. So kann das erste Material eine hohe Festigkeit bei geringem Gewicht aufweisen, während das zweite Material hinsichtlich der Verschweißbarkeit mit einem Werkstoff einer Tankwandung optimiert ist.

Aufgrund der Durchdringung der Durchgangsöffnungen durch das zweite Material kann eine zuverlässige formschlüssige Verbindung zwischen dem ersten und dem zweiten Material bereitgestellt werden.

Gemäß einer weiteren Ausgestaltung des Versteifungselements ist vorgesehen, dass der erste Steg einen geringeren Abstand zu einer Längsachse des Versteifungselements aufweist als der zweite Steg.

Dadurch, dass wenigstens ein erster und ein zweiter Steg relativ zueinander unter einem Versatz zur Längsachse angeordnet sind, können in einem Schnitt quer zur Längsachse betrachtet eine Mehrzahl formschlüssiger Verbindungen zwischen dem ersten Material und dem zweiten Material gebildet werden. So kann eine zuverlässige Verbindung zwischen dem ersten Material und dem zweiten Material ausgebildet werden, wobei statische und dynamische Betriebslasten auf mehrere Stege verteilt werden können.

Der erste Steg kann zumindest abschnittsweise zwischen der Längsachse und dem zweiten Steg angeordnet sein. Die Stege weisen daher in einer quer zur Längsachse orientierten, radialen Richtung einen radialen Versatz bzw. einen radialen Abstand zueinander auf. Mit anderen Worten sind, ausgehend von der Längsachse in einer Richtung quer zur Längsachse betrachtet, der erste und der zweite Steg zumindest abschnittsweise entlang einer Flucht angeordnet.

Mit zweitem Material ausgefüllte Durchgangsöffnungen können quer zur Längsachse orientiert sein, um entlang der Längsachse orientierte Lasten von dem ersten Material in das zweite Material einzuleiten und umgekehrt.

Gemäß einer weiteren Ausgestaltung des Versteifungselements sind die Stege zumindest abschnittsweise nach Art einer Doppelwandung angeordnet. Auf diese Weise kann eine kompakte Anordnung der Stege erreicht werden. Ein zwischen den Stegen gebildeter Zwischenraum kann von zweitem Material ausgefüllt sein. Weiter können die Stege zweiseitig von zweitem Material umschlossen sein, sodass in einem Schnitt quer zur betrachtet ein fünfschichtiger Wandungsbau realisiert sein kann.

In einem Schnitt quer zur Längsachse betrachtet kann das Versteifungselement zumindest abschnittsweise nach Art einer Sandwichstruktur aufgebaut sein, wobei die Sandwichstruktur beispielsweise fünf Schichten aufweisen kann. So ist beispielsweise eine erste Schicht aus zweitem Material zumindest abschnittsweise zweiseitig von zwei Schichten aus 1. Material eingefasst, wobei diese Schichten aus erstem Material wiederum von Schichten des zweiten Materials eingefasst sind.

Alternativ oder ergänzend kann der erste Steg eine erste Hülse und der zweite Steg eine zweite Hülse bilden. Die zweite Hülse fasst die erste Hülse umfangsseitig zumindest abschnittsweise ein. Durch die verschachtelten Hülsen kann in einfacher Weise ein mehrschichtiger Wandungsaufbau realisiert werden.

Es können drei oder mehr Stege vorgesehen sein. Auf diese Weise können Betriebslasten auf eine Mehrzahl von Stegen verteilt werden. Soweit beispielsweise drei Stege vorgesehen sind, die beispielsweise durch drei ineinander verschachtelt angeordnete Hülsen realisiert werden, kann ein siebenschichtiger Wandungsaufbau erreicht werden.

Der erste und der zweite Steg können in einer entlang der Längsachse gemessenen Höhenerstreckung der Stege betrachtet zumindest abschnittsweise einen konstanten radialen Abstand zueinander aufweisen, wobei der radiale Abstand insbesondere orthogonal zur Längsachse gemessen wird.

Zwei Stege können in einem gemeinsamen Nutgrund zusammenlaufen bzw. ausgehend von einem gemeinsamen Nutgrund erstreckt sein. Auf diese Weise können die Stege in einfacher Weise beispielsweise einstückig in einem Spritzgussverfahren an einen Kragen bzw. an einen Zwischenabschnitt oder Mittelteil des Versteifungselements angeformt werden. Ein solcher Zwischenabschnitt oder Mittelteil kann beispielsweise zwischen zwei an entgegengesetzten Enden des Versteifungselements vorgesehenen Verbindungsabschnitten angeordnet sein und diese Verbindungabschnitte entlang der Längsachse miteinander verbinden.

Der erste Steg und der zweite Steg können entlang der Längsachse gemessen die gleiche Höhe aufweisen und/oder stirnseitig bündig zu einer gemeinsamen, orthogonal zur Längsachse orientierten Planebene abschließen. Damit kann eine kompakte Bauweise des Versteifungselements erreicht werden.

Der erste und der zweite Steg können die gleiche Wanddicke aufweisen, um die Herstellbarkeit in einem Spritzgussverfahren zu begünstigen.

Eine Wanddicke bzw. Stegdicke eines Stegs, die in einer Richtung quer zur Längsachse gemessen wird, kann 2 mm bis 8 mm betragen. Eine Steghöhe eines Stegs, die parallel zur Längsachse L gemessen wird, kann 10 mm bis 80 mm betragen. Ein Durchmesser oder eine Umhüllende einer Durchgangsöffnung eines Stegs kann 3 mm bis 20 mm betragen, wobei die Durchgangsöffnungen in einem Querschnitt eine kreisrunde, ovale oder polygonale Form aufweisen können.

Das zweite Material kann in einem Spritzgussverfahren mit den Stegen des ersten Materials verbunden werden. Das zweite Material kann dabei das erste Material derart umschließen, dass das zweite Material seinerseits Stege ausbildet, die die Stege des ersten Materials umgreifen bzw. in zwischen den Stegen des ersten Materials gebildete Zwischenräume eingreifen.

Das zweite Material kann nach Art einer Kappe geformt sein, die das erste Material im Bereich der Stege stirnseitig einfasst, umschließt und im Bereich der Durchgangsöffnungen durchdringt.

Zwischen Stegen des zweiten Materials können insbesondere Querstreben gebildet sein, die in den Durchgangsöffnungen der Stege des ersten Materials angeordnet sind.

Die Querstreben können einen Kreisdurchmesser oder einen umhüllenden Durchmesser von 3 mm bis 20 mm aufweisen, wobei die Querstreben in einem Querschnitt eine kreisrunde, ovale oder polygonale Form aufweisen können.

Stirnseitig können in das zweite Material Kanäle eingeformt sein, die zum Ablauf von Flüssigkeit zwischen einer Innenwandung des Flüssigkeitsbehälters und einer mit der Innenwandung verbundene Stirnseite des Versteifungselements vorgesehen sind.

Die Stege können in einem Schnitt quer zur Längsachse betrachtet eine polygonale Form aufweisen, wie ein Pentagon, ein Hexagon oder dergleichen. So können die Stege in einfacher Weise im Spritzgussverfahren hergestellt werden. Ein Steg mit polygonaler Form kann z.B. aus zwei oder mehr Stegsegmenten gebildet sein, die Planflächen aufweisen können, und die über Radien- oder Ecksegmente miteinander verbunden sind.

Ein Stegsegment kann eine oder mehrere Durchgangsöffnungen aufweisen, die insbesondere quer zur Längsachse des Versteifungselements erstreckt sind. Beispielsweise können zwei, drei vier oder mehr Durchgangsöffnungen an einem solchen Stegsegment vorgesehen sein. Die Stegsegmente können relativ zur Längsachse betrachtet unter einem Winkel zueinander angeordnet sind. Einem Stegsegment des ersten Stegs kann ein dazu beabstandetes Stegsegment des zweiten Stegs zugeordnet sein, um einen symmetrischen Aufbau und eine homogene Belastung der Stege durch Betriebslasten zu erreichen.

Den Stegen können Entlüftungsöffnungen zugeordnet sein. Mithilfe der Entlüftungsöffnungen kann sichergestellt werden, dass ein zwischen den Stegen gebildeter Zwischenbereich mit zweitem Material ausgefüllt werden kann, wobei beispielsweise in einem Spritzgussverfahren in diesem Zwischenbereich vorhandene Luft durch das zweite Material über die Entlüftungsöffnungen verdrängt werden kann.

Beispielsweise sind die Entlüftungsöffnungen Bohrungen oder Ausnehmungen, die ausgehend von einem zwischen den Stegen gebildeten, mit zweitem Material gefüllten Zwischenraum in eine umfangsseitige, äußere Mantelfläche oder eine innere Mantelfläche des Versteifungselements münden.

Es kann eine Mehrzahl von Entlüftungsöffnungen vorgesehen sein. Beispielsweise kann jedem Stegsegment oder einer Paarung von zueinander beabstandeten Stegsegmenten eines ersten und zweiten Stegs eine Entlüftungsöffnung zugeordnet sein.

Um ein möglichst leicht bauendes Versteifungselement zu erreichen, kann das Versteifungselement eine entlang der Längsachse erstreckte Durchgangsöffnung aufweisen, die umfangsseitig zumindest abschnittsweise von dem ersten Steg und/oder dem zweiten Steg eingefasst ist. Neben dem Aspekt der Materialersparnis bietet die entlang der Längsachse erstreckte Durchgangsöffnung zudem die Möglichkeit, im fertig montierten Zustand in diesem Bereich Kraftstoff zu bevorraten, sodass das Versteifungselement lediglich eine geringe Einschränkung des zur Verfügung stehenden Tankvolumens darstellt.

Bei der entlang der Längsachse erstreckten Durchgangsöffnung kann es sich insbesondere um eine zentrale Durchgangsöffnung handeln, die das Versteifungselement entlang seiner gesamten entlang der Längsachse gemessenen Länge durchzieht.

Um eine einfache und kostengünstige Fertigung der Durchgangsöffnungen der Stege zu erreichen, ist gemäß einer weiteren Gestaltung des Versteifungselements vorgesehen, dass, ausgehend von einer Längsachse in einer Richtung quer zur Längsachse betrachtet, eine Durchgangsöffnung des ersten Stegs zumindest abschnittsweise in einer Flucht mit einer Durchgangsöffnung des zweiten Stegs angeordnet ist.

Jede Durchgangsöffnung des ersten Stegs kann, in einer Richtung quer zur Längsachse betrachtet, in einer Flucht mit einer Durchgangsöffnung des zweiten Stegs angeordnet sein.

Die Durchgangsöffnungen können an einem oder mehreren Stegen mehrreihig und/oder rasterartig angeordnet sein. So können sowohl entlang einer der Längsachse gemessenen Höhenerstreckung des Versteifungselements und in einer Richtung quer dazu eine Mehrzahl von formschlüssigen Verbindungen zwischen dem zweiten Material und dem ersten Material hergestellt werden, um eine zuverlässige Verbindung zwischen dem ersten Material und dem zweiten Material zu erreichen.

Die in den Stegen des ersten Materials gebildeten, mit zweitem Material gefüllten Durchgangsöffnung können eine kreisrunde, ovale oder polygonale Form aufweisen. Durch eine kreisrunde oder ovale Querschnittsform können Lastspitzen infolge von Kerbwirkung vermieden werden. Eine kreisrunde Querschnittsform ist kostengünstig herstellbar.

Die Durchgangsöffnungen in den Stegen des ersten Materials können beispielsweise durch dorn- oder bolzenförmige Formbauteile bzw. Formschieber innerhalb einer Spritzgussform abgebildet werden, die nach dem Spritzgussvorgang aus einem Formhohlraum abgezogen bzw. herausgezogen werden. Das Herausziehen erfolgt beispielsweise in einer linearen Bewegung entlang einer Längsachse eines solchen Dorns oder Bolzens. So können in einfacher Weise Durchgangsöffnungen an zwei oder mehr Stegen gebildet werden.

Gemäß einer weiteren Ausgestaltung ist vorgesehen, dass das zweite Material die wenigstens zwei Stege, also den ersten Steg und den zweiten Steg, stirnseitig und umfangsseitig umschließt und durchdringt. So kann eine zuverlässige Verbindung zwischen dem ersten Material dem zweiten Material hergestellt werden.

Um eine kostengünstige Fertigung des Versteifungselements zu erreichen, insbesondere durch Spritzguss, kann das Versteifungselement aus zwei Halbschalen zusammengesetzt sein.

Insbesondere können die Halbschalen in ihrer Geometrie identisch sein. So können die Halbschalen beispielsweise mittels einer einzigen Spritzgusskavität hergestellt werden. Weiter bietet die Herstellung des Versteifungselements aus zwei Halbschalen den Vorteil, dass vor dem Zusammensetzen der Halbschalen gegebenenfalls Um- oder Anbauteile an oder in dem Versteifungselement befestigt werden können.

Die Halbschalen können formschlüssig ineinandergreifende Verbindungselemente aufweisen, um eine kostengünstige Verbindung und/oder eine Vorfixierung für eine anschließende wechselseitige Verschweißung der Halbschalen miteinander und/oder mit einem Tank bereitzustellen. So können Formelemente, wie zum Beispiel Nuten oder Dorne, an den Halbschalen vorgesehen sein, die formschlüssig ineinandergreifen und/oder ineinander gepresst werden können, um die Halbschalen zueinander zu fixieren. Zwischen einander zugeordneten Formelementen der Halbschalen kann eine Presspassung gebildet sein.

Die Halbschalen können stoffschlüssig miteinander verbunden werden. So kann eine unlösbare Verbindung zwischen den Halbschalen geschaffen werden.

Sofern das Versteifungselement aus zwei Halbschalen gebildet ist, können die Halbschalen entlang einer Längs- oder Verbindungsebene, welche insbesondere die Längsachse umfasst, gefügt sein.

Um eine zuverlässige Anbindung des Versteifungselements an zwei Halbschalen eines Flüssigkeitsbehälters und/oder eine Innenwandung eines Flüssigkeitsbehälters zu erreichen, kann an entgegengesetzten Enden des Versteifungselements jeweils ein Verbindungsabschnitt vorgesehen sein.

Die an entgegengesetzten Enden des Versteifungselements angeordneten Verbindungsabschnitte können über Streben aus erstem Material miteinander verbunden sein, wobei zwischen den Streben Abstände gebildet sind, sodass eine entlang der Längsachse erstreckte Durchgangsöffnung lediglich abschnittsweise von den Streben begrenzt wird. Auf diese Weise kann in einem Flüssigkeitsbehälter für ein Kraftfahrzeug bevorrateter Treibstoff auch im Bereich der entlang der Längsachse erstreckten Durchgangsöffnung bevorratet sein.

Das Versteifungselement kann eine oder mehrere Sollbruchstellen aufweisen, sodass das Versteifungselement bei einer überhöhten Querbelastung bzw. Scherbelastung und/oder Längsbelastung des Flüssigkeitsbehälters in einem Crashfall in zwei Hälften geteilt wird, um ein Zerstören der Tankwandung zu verhindern und ein Austreten von Kraftstoff zu vermeiden.

Ein Verbindungsabschnitt kann im Bereich eines stirnseitigen Endes des Versteifungselements vollständig aus zweitem Material gebildet sein. Insbesondere können stirnseitig auskragende Abschnitte aus zweitem Material als Schweißreserven zur Verbindung mit einer Tankinnenwandung vorgesehen sein.

Nach einer weiteren Ausgestaltung des Versteifungselements ist vorgesehen, dass das erste Material ein PAI (Polyamidimid), PEEK (Polyetheretherketon), PAEK (Polyaryletherketon), PPA (Polyphtalamide), PBT (Polybutylenterephthalat), PE (Polyethylen), HDPE (hochdichtes Polyethylen), POM (Polyoxymethylen), PPS (Polyphenylensulfid) oder PA (Polyamid) ist und/oder dass das das zweite Material ein PAI (Polyamidimid), PEEK (Polyetheretherketon), PAEK (Polyaryletherketon), PPA (Polyphtalamide), PBT (Polybutylenterephthalat), PE (Polyethylen), HDPE (hochdichtes Polyethylen), POM (Polyoxymethylen), PPS (Polyphenylensulfid) oder PA (Polyamid) ist. Beispielsweise kann das erste Material ein POM und das zweite Material ein HDPE sein.

Das zweite Material ist bevorzugt mit einer Tankwandung verschweißbar.

Das erste Material und/oder das zweite Material können faserverstärkt sein.

Nach einer weiteren Ausgestaltung des Versteifungselements ist vorgesehen, dass die Abzugskräfte zwischen dem ersten und dem zweiten Material größer oder gleich 15kN sind. Dazu wird das Versteifungselement an entgegengesetzten Enden jeweils mit einer Platte verscheißt, wobei die Platte aus einem Material des Flüssigkeitsbehälters bzw. einem Wandungsmaterial des Flüssigkeitsbehälters hergestellt ist. Die endseitigen Platten werden mit einer Kammvorrichtung, die eine gleichmäßige Krafteinleitung ermöglicht, in einer Zugmaschine eingespannt und mit einer Zuggeschwindigkeit von 50-100 mm/min bis zum Bruch belastet. Dabei werden die Platten entlang einer Längsachse des Versteifungselements in entgegengesetzte Richtungen auseinander bewegt.

Nach einer weiteren Ausgestaltung des Versteifungselements ist vorgesehen, dass die Zugfestigkeit des ersten Materials die Streckspannung des zweiten Materials um den Faktor 2,6 oder weniger übersteigt. Zugfestigkeit und Streckspannung können insbesondere nach DIN EN ISO 527 bestimmt werden.

Insbesondere können durch die gegenständliche Ausgestaltung der Verbindung zwischen dem ersten und dem zweiten Material die voranstehend beschriebenen Abzugskräfte von 15kN oder mehr mit Materialkombinationen erreicht werden, bei denen die Zugfestigkeit des ersten Materials die Streckspannung des zweiten Materials um den Faktor 2,6 oder weniger übersteigt.

Nach einer weiteren Ausgestaltung des Versteifungselements ist vorgesehen, dass der erste Steg und der zweite Steg zumindest abschnittsweise einen konstanten Abstand zueinander aufweisen. Alternativ oder ergänzend können der erste Steg und/oder der zweite Steg einen quader- oder plattenförmigen Abschnitt haben und die Durchgangsöffnungen in dem quader- oder plattenförmigen Abschnitt angeordnet sein. So können die Stege in kostengünstiger und einfacher Weise als Wandelemente mit konstanter Wanddicke in einem Spritzgussverfahren hergestellt werden. Insbesondere können die plattenartigen Abschnitte einander zugewandte, parallele Planflächen aufweisen, um eine Einbringen von zweitem Material in einen zwischen den plattenartigen Abschnitten gebildeten Bereich zu begünstigen.

In den plattenförmigen Stegen können Durchgangsöffnungen vorgesehen sein, die in einer Flucht angeordnet sind oder einen Versatz zueinander aufweisen.

Die Stege können ausgehend von einem Mittelstück des Versteifungselements gabelförmig verzweigt sein. Insbesondere können die Stege entlang einer Längsrichtung oder einer Längsachse auskragend erstreckt sein.

An einem ersten Ende und einem dem ersten Ende entgegengesetzten, zweiten Ende des Versteifungselements kann jeweils ein Verbindungsabschnitt vorgesehen sein und die Verbindungsabschnitte können über ein Mittelstück miteinander verbunden sein.

Das Versteifungselement kann ein Mittelstück aufweist, das eine oder mehrere Streben hat.

Das Versteifungselement kann beispielsweise eine einzelne Strebe aufweisen, die an zwei entgegengesetzten Endbereichen jeweils einen Verbindungsabschnitt hat. Die einzelne Strebe kann plattenartig geformt sein und eine konstante Dicke aufweisen. Weiter können die Verbindungsabschnitte ausgehend von der plattenartigen Strebe gabelförmig verzweigt sein. So kann das Versteifungselement kostengünstig als Spritzgussbauteil mit im Wesentlichen konstanter Wandstärke hergestellt werden.

Die Durchgangsöffnungen der Stege können einen axialen Versatz zueinander aufweisen. So kann eine zentrale Längsachse einer ersten Durchgangsöffnung des ersten Stegs unter einem Abstand zu einer zentralen Längsachse einer zweiten Durchgangsöffnung des zweiten Stegs aufweisen. Insbesondere können die Längsachsen der ersten und der zweiten Durchgangsöffnung parallel und mit einem Abstand zueinander verlaufen.

Insbesondere kann an einem ersten Steg einen erste raster- oder reihenartige Anordnung von Durchgangsöffnungen vorgesehen sein, die sich von einer zweiten raster- oder reihenartigen Anordnung der Durchgangsöffnungen des zweiten Stegs unterscheidet. Beispielsweise kann der erste Steg eine einreihige Anordnung von Durchgangsöffnungen aufweisen, während der zweite Steg eine zwei- oder mehrreihigen Anordnung von Durchgangsöffnungen aufweist. Durch die individuelle Anordnung der Durchgangsöffnungen kann die Verbindung zwischen dem ersten und dem zweiten Material an die zu ertragenden Betriebslasten im fertig montieren Zustand angepasst werden.

Ein Versatz zwischen Durchgangsöffnungen des ersten Stegs und Durchgangsöffnungen des zweiten Stegs kann fertigungstechnisch besonders einfach und kostengünstig ein einem Spritzgussverfahren realisiert werden, insbesondere für den Fall, dass die Stege jeweils einen quader- oder plattenförmigen Abschnitt haben, in dem die Durchgangsöffnungen vorgesehen sind.

Gemäß einem weiteren Aspekt betrifft die Erfindung einen Flüssigkeitsbehälter für ein Kraftfahrzeug, mit einem voranstehend beschriebenen Versteifungselement, wobei das Versteifungselement in einem Innenraum des Flüssigkeitsbehälters angeordnet ist.

Der Flüssigkeitsbehälter, insbesondere ein Kraftstofftank, kann aus zwei Halbschalen zusammengesetzt sein, wobei ein erster Verbindungsabschnitt des Versteifungselements einer ersten Halbschale des Flüssigkeitsbehälters zugeordnet und mit dieser verbunden ist und ein zweiter Verbindungsabschnitt des Versteifungselements einer zweiten Halbschale des Flüssigkeitsbehälters zugeordnet und mit dieser verbunden ist.

Die Halbschalen können mit den Verbindungsabschnitten verschweißt sein, wobei die Halbschalen und die Verbindungsabschnitte miteinander verschweißbare Kunststoffe aufweisen.

Nachfolgend wird die Erfindung anhand einer Ausführungsbeispiele darstellenden Zeichnung näher beschrieben. Es zeigen jeweils schematisch:
- Fig. 1: ein erfindungsgemäßes Versteifungselement in einer perspektivischen Ansicht;
- Fig. 2: einen Verbindungsabschnitt des Versteifungselements aus Fig. 1 in einem Längsschnitt;
- Fig. 3: einen weiteren Verbindungsabschnitt eines erfindungsgemäßen Versteifungselements in einem Längsschnitt;
- Fig. 4: einen weiteren Verbindungsabschnitt eines erfindungsgemäßen Versteifungselements in einem Längsschnitt;
- Fig. 5: einen erfindungsgemäßen Flüssigkeitsbehälter für ein Kraftfahrzeug in einem Querschnitt;
- Fig. 6: ein erfindungsgemäßes Versteifungselement in einem Längsschnitt;
- Fig. 7A: eine Ausgestaltung eines Verbindungsabschnitts des Versteifungselements aus Fig. 6 in einer perspektivischen Ansicht;
- Fig. 7B: eine weitere Ausgestaltung eines Verbindungsabschnitts des Versteifungselements aus Fig. 6 in einer perspektivischen Ansicht;
- Fig. 8: einen erfindungsgemäßen Flüssigkeitsbehälter für ein Kraftfahrzeug in einem Querschnitt.

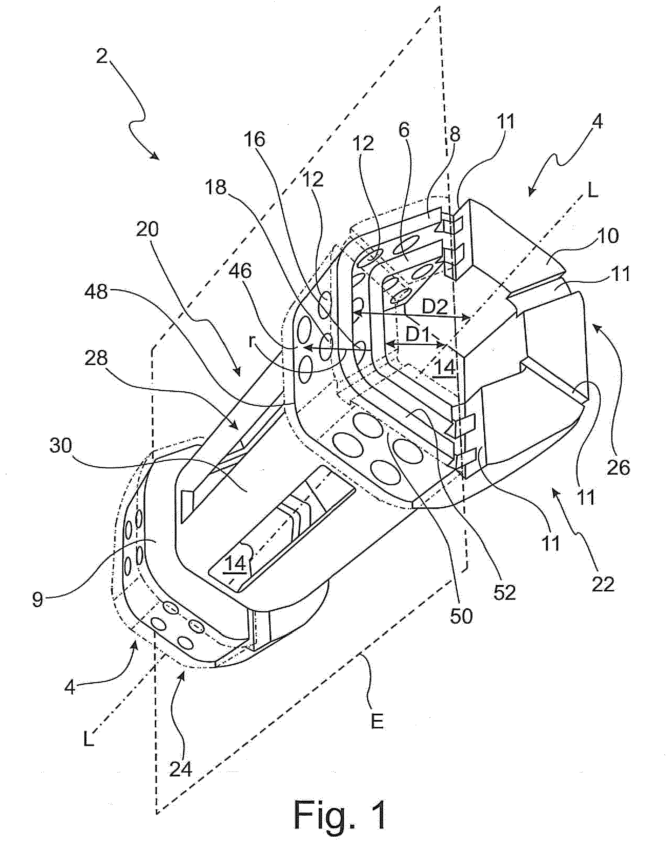

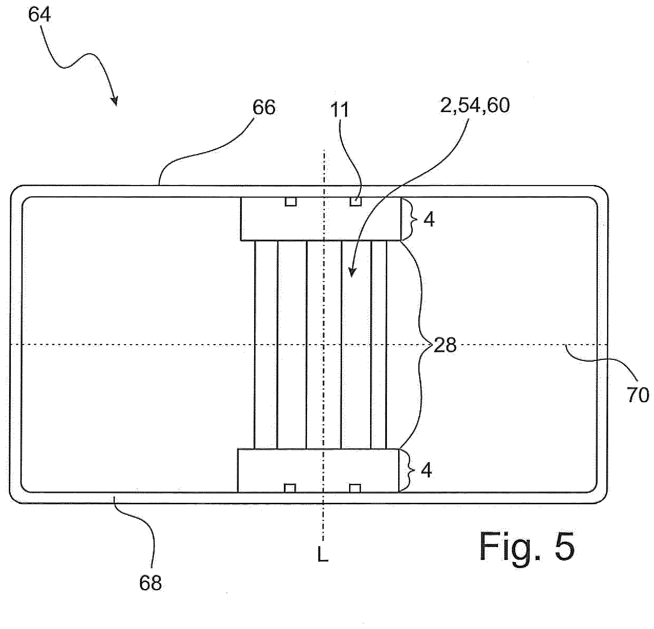

In Fig. 1 ist ein Versteifungselement 2 für einen Flüssigkeitsbehälter 64 (Fig. 5) für ein Kraftfahrzeug dargestellt. Der Flüssigkeitsbehälter 64 ist vorliegend ein Kraftstofftank 64. Das Versteifungselement 2 hat einen Verbindungsabschnitt 4 zum Verbinden des Versteifungselements 2 mit dem Flüssigkeitsbehälter 64.

Der Verbindungsabschnitt 4 weist einen ersten Steg 6 und einen zweiten Steg 8 aus einem ersten Material auf. Das erste Material ist vorliegend POM. Das Versteifungselement 2 hat einen Kragen 9, der zum Handhaben des Versteifungselements 2 in automatisierten Montage- oder Fügeeinrichtungen vorgesehen ist.

Der erste Steg 6 und der zweite Steg 8 sind von einem zweiten Material 10 umschlossen. Das zweite Material 10 durchdringt Durchgangsöffnungen 12 der Stege 6, 8. Der erste Steg 6 weist einen geringeren Abstand D1 zu einer Längsachse L des Versteifungselements 4 auf als der zweite Steg 8. Ein Abstand D2 des zweiten Stegs 8 zur Längsachse L ist daher größer als der Abstand D1. Die Abstände D1 und D2 sind in den Figuren 1, 2 und 3 dargestellt. Das zweite Material 10 ist vorliegend HDPE.

Stirnseitig sind in das zweite Material 10 Kanäle 11 eingeformt. Über die Kanäle 11 kann im fertig montierten Zustand Treibstoff, der in den Verbindungsabschnitt 4 gespült wird, zwischen einer Tankwandung und dem Verbindungsabschnitt 4 abfließen.

Die Stege 6, 8 sind nach Art einer Doppelwandung angeordnet. Der erste Steg 6 bildet eine erste Hülse 6 und der zweite Steg 8 bildet eine zweite Hülse 8. Die zweite Hülse 8 fasst die erste Hülse 6 umfangsseitig ein. Die Stege 6, 8 weisen in einem Schnitt quer zur Längsachse L betrachtet eine hexagonale Form auf.

Zur Verbesserung der Nachvollziehbarkeit des Aufbaus des Verbindungsabschnitts 4 ist in Fig. 1 das zweite Material 10 in einem Teilbereich des Verbindungsabschnitts 4 transparent dargestellt, wie durch die strichpunktierte Linie dargestellt. Es versteht sich, dass das zweite Material 10 die Stege 6, 8 vorliegend stirnseitig und umfangsseitig vollständig umschließt.

Das Versteifungselement 2 weist eine entlang der Längsachse L erstreckte Durchgangsöffnung 14 auf.
Eine Durchgangsöffnung 16 des ersten Stegs 6 ist, in einer Richtung r quer zur Längsachse betrachtet, in einer Flucht mit einer Durchgangsöffnung 18 des zweiten Stegs 8 angeordnet.

Die Durchgangsöffnungen 12 der Stege 6, 8 sind rasterartig angeordnet.

Das Versteifungselement 2 ist aus zwei Halbschalen 20, 22 zusammengesetzt, die entlang einer Ebene E miteinander verbunden sind. An entgegengesetzten Enden 24, 26 des Versteifungselements 2 ist jeweils ein Verbindungsabschnitt 4 vorgesehen.

Die Abzugskräfte zwischen dem ersten und dem zweiten Material sind größer 15 kN. Die Zugfestigkeit des ersten Materials übersteigt die Streckspannung des zweiten Materials 10 um den Faktor 2,6 oder weniger.

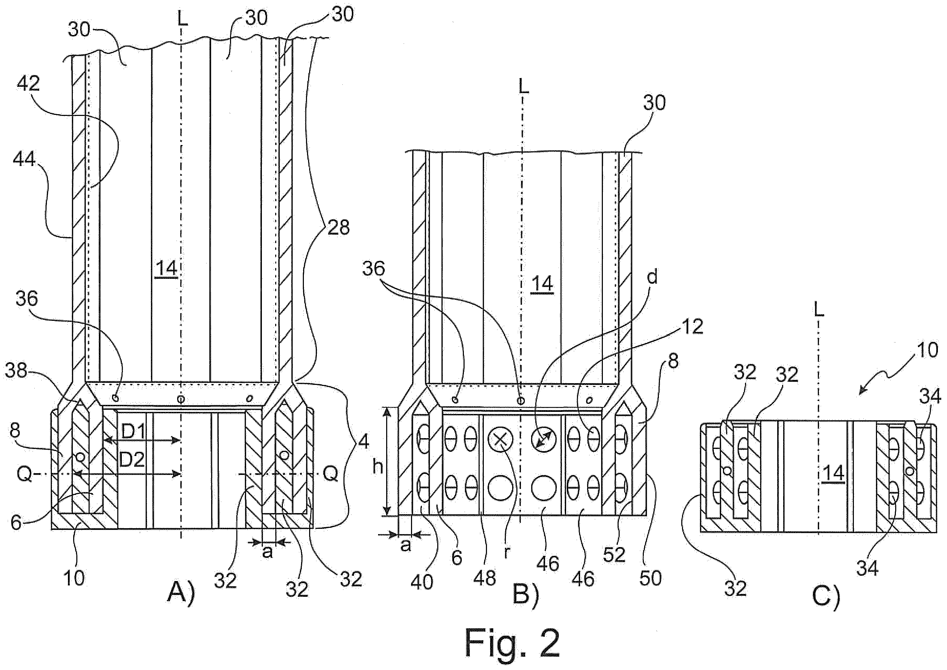

Wie Fig. 2 zu entnehmen ist, sind die Stege 6, 8 an einem Mittelstück 28 angeformt, dass neben den Stegen 6, 8 Streben 30 aufweist, welche die entlang der Längsachse L erstreckte Durchgangsöffnung 14 abschnittsweise umfangsseitig einfassen bzw. begrenzen. Die Streben 30 umfassen eine Sollbruchstelle, die bei einer Überlast in einer Richtung quer zur Längsachse zuerst versagen, so dass die endseitigen Verbindungsabschnitte 4 voneinander getrennt werden.

Die Wanddicke bzw. Stegdicke a, die in einer Richtung quer zur Längsachse gemessen wird, kann 2 mm - 8 mm betragen, vorliegend 5 mm. Die Steghöhe h, die parallel zur Längsachse L gemessen wird, kann 10 mm bis 80 mm betragen, vorliegend 40 mm. Der Durchmesser d der Durchgangsöffnungen 12 kann 3 - 20 mm betragen, vorliegend 5 mm.

Das zweite Material 10 ist vorliegend nach Art einer Kappe geformt, die das Versteifungselement 2 endseitig abschließt (Fig. 2). Das zweite Material 10 weist seinerseits Stege 32 auf, welche die Stege 6, 8 des ersten Materials umgreifen und mit Querstreben 34 durchdringen.

Das zweite Material 10 wird durch Umspritzen der Stege 6, 8 in einem Spritzgussvorgang geformt. Zur Veranschaulichung der sich dabei für das zweite Material 10 ergebenden Form ist das zweite Material 10 in Fig. 2C separat dargestellt.

Drei Stege 32 des zweiten Materials 10 sind über die Querstreben 34 miteinander verbunden. Diese Querstreben 34 sind im Bereich des Verbindungsabschnitts 4 innerhalb der Durchgangsöffnungen 12 angeordnet und sorgen für eine formschlüssige Verbindung des ersten Materials mit dem zweiten Material 10.

Den Stegen 6, 8 sind Entlüftungsöffnungen 36 zugeordnet, die ausgehend von einem gemeinsamen Nutgrund 38 der Stege 6, 8 bzw. einem zwischen den Stegen 6, 8 vor dem Einbringen des zweiten Materials 10 gebildeten Zwischenraums 40 die Stege 6, 8 durchdringen und im Bereich einer inneren Mantelfläche 42 oder einer äußeren Mantelfläche 44 münden.

Die Stege 6, 8 sind vorliegend jeweils aus sechs Stegsegmenten 46 gebildet, die über Ecksegmente bzw. Eckbereiche 48 ineinander übergehen. In jedem Stegsegment 48 sind zwischen einer äußeren Planfläche 50 und einer inneren Planfläche 52 jeweils vier Durchgangsöffnungen 12 angeordnet.

Im Bereich des Verbindungsabschnitts 4 ergibt sich in dem gezeigten Längsschnitt oder auch in einem Schnitt Q quer zur Längsachse L betrachtet ein fünfschichtiger Wandungsaufbau.

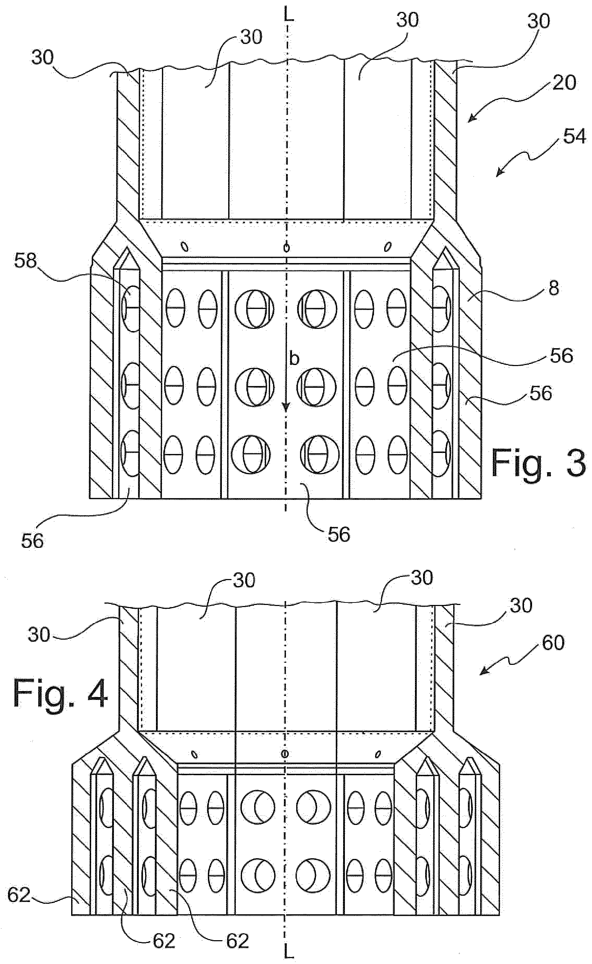

Gemäß einer weiteren Ausgestaltung eines Verbindungselements 54 sind an einem Stegsegment 56 sechs Durchgangsöffnungen 58 angeordnet (Fig. 3). Die Durchgangsöffnungen 58 sind in einer axialen Richtung b entlang der Längsachse L betrachtet in drei Reihen angeordnet.

Gemäß einer weiteren Ausgestaltung eines Verbindungselement 60 sind drei Stege 62 vorgesehen.

Fig. 5 zeigt einen Flüssigkeitsbehälter 64 für ein Kraftfahrzeug. Der Flüssigkeitsbehälter 64 weist eine obere Halbschale 66 und eine untere Halbschale 68 auf. Die Halbschalen 66, 68 sind entlang einer Verbindungsebene 70 miteinander verschweißt worden. Die Halbschalen 66, 68 sind mithilfe eines voranstehend beschriebenen Versteifungselements 2, 54, 60 miteinander verbunden. Die an entgegengesetzten Enden des Versteifungselements 2, 54, 60 angeordneten Verbindungsabschnitte 4 sind jeweils mit der Halbschale 66 und der Halbschale 68 verschweißt. Die Verbindungsabschnitte 4 sind über das Mittelstück 28 miteinander verbunden.

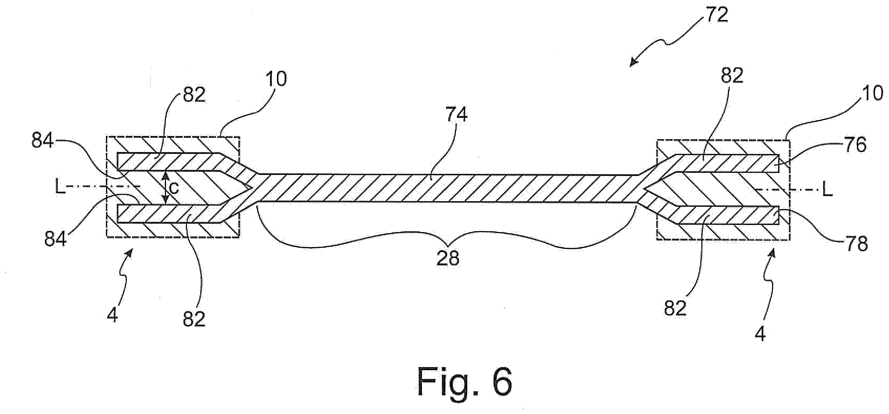

Fig. 6 zeigt ein weiteres Versteifungselement 72 in einem Querschnitt. Das Versteifungselement 72 hat zwei endseitige Verbindungsabschnitte 4. Die endseitigen Verbindungsabschnitte 4 weisen jeweils einen ersten Steg 76 und einen zweiten Steg 78 auf. Die Stege 76, 78 sind von zweitem Material 10 umgeben und durchdrungen. Das Versteifungselement 72 weist weiter ein Mittelstück 28 auf, dass vorliegend als platten- oder bandförmige Strebe 74 ausgebildet ist. Ausgehend von der platten- oder bandförmigen Strebe 74, die entlang einer Längsachse L betrachtet einen konstanten Querschnitt aufweist, sind die Stege 76, 78 gabelförmig verzweigt. Die Stege 76, 78 weisen im Wesentlichen die gleiche Wandstärke auf, wie die plattenförmige Strebe 78 des Mittelstücks 28.

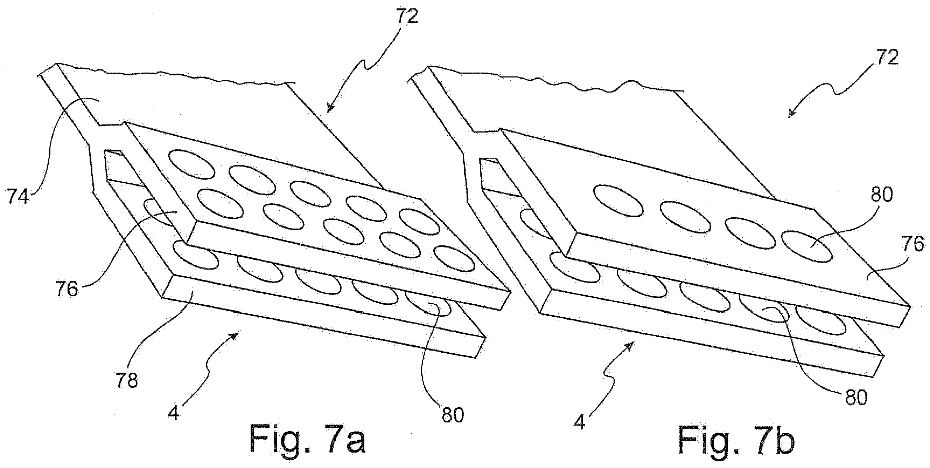

Die Figuren 7A und 7B zeigen mögliche Ausgestaltungen der Stege 76, 78. Die Stege 76, 78 haben gemäß Fig. 7A Durchgangsöffnungen 80, die in einer Flucht angeordnet sind. Die Stege 76, 78 gemäß Fig. 7B zeigen eine weitere Variante der Anordnung von Durchgangsöffnungen 80, die einen Versatz zueinander aufweisen. Dabei weist der Steg 76 gemäß Fig. 7B eine einzelne Reihe von Durchgangsöffnungen 80 auf, während der Steg 78 gemäß Fig. 7B eine zweireihige von Durchgangsöffnungen 80 hat. Die Anordnung von Durchgangsöffnungen 80 im Bereich der Stege 76, 78 gemäß Fig. 7A ist symmetrisch, sodass sich eine regelmäßige, fluchtende Anordnung der Durchgangsöffnungen 80 ergibt.

Wie der perspektivischen Darstellung der Figuren 7A und 7B zu entnehmen ist, sind die Stege 76, 78 ausgehend von dem Mittelstück 28 bzw. der plattenförmigen Strebe 74 des Mittelstücks 28 gabelförmig verzweigt. Zur besseren Nachvollziehbarkeit der Geometrie der Stege 76, 78 und der Anordnung der Durchgangsöffnungen 80 ist in den Figuren 7A und 7B auf die Darstellung des zweiten Materials 10 verzichtet worden. Es versteht sich, dass bei dem dargestellten Versteifungselement 72 gemäß der Figuren 6, 7A und 7B die jeweiligen Stege 76, 78 mit zweitem Material 10 versehen sind, das zur Anbindung des Versteifungselements 72 an die Innenwandungen eines Kraftstofftanks vorgesehen ist.

Die Stege 76, 78 weisen einen konstanten Abstand c zueinander auf. Der erste Steg 76 und der zweite Steg 78 haben einen plattenförmigen Abschnitt 82. Die Durchgangsöffnungen 80 sind jeweils in dem plattenförmigen Abschnitt 82 angeordnet. Die plattenförmigen Abschnitte 82 haben einander zugewandte Planflächen 84, die im Wesentlichen parallel zueinander orientiert sind.

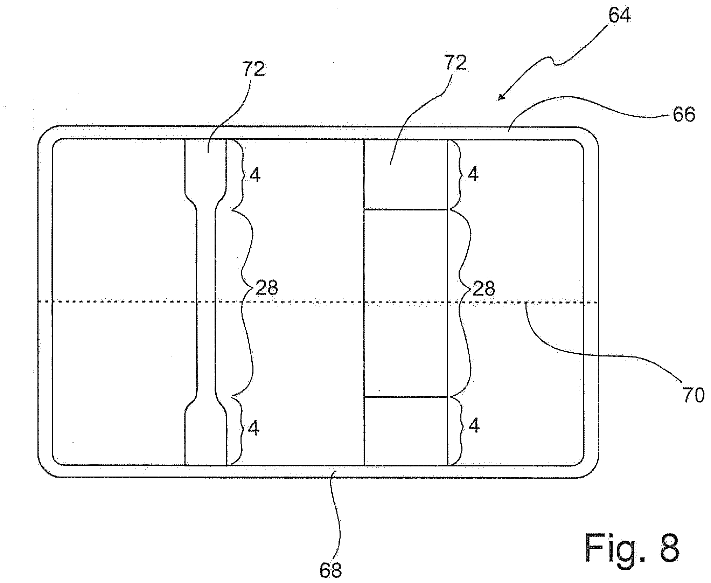

In Fig. 8 ist exemplarisch die Einbindung von Versteifungselementen 72 in einen Kraftstofftank 64 dargestellt. Die jeweiligen Verbindungsabschnitte 4 sind mit den Halbschalen 66, 68 verschweißt und bewirken so eine Aussteifung der Struktur des Kraftstofftanks 64.

### Bezugszeichen

- 2: Versteifungselement
- 4: Verbindungsabschnitt
- 6: erster Steg
- 8: zweiter Steg
- 9: Kragen
- 10: zweites Material, Kappe
- 11: Kanäle
- 12: Durchgangsöffnung
- 14: entlang der Längsachse L erstreckte Durchgangsöffnung
- 16: Durchgangsöffnung des ersten Stegs
- 18: Durchgangsöffnung des zweiten Stegs
- 20: Halbschale
- 22: Halbschale
- 24: Ende des Versteifungselements
- 26: Ende des Versteifungselements
- 28: Mittelstück
- 30: Streben
- 32: Stege
- 34: Querstreben
- 36: Entlüftungsöffnungen
- 38: Nutgrund
- 40: Zwischenraum
- 42: innere Mantelfläche
- 44: äußere Mantelfläche
- 46: Stegsegment
- 48: Ecksegment, Eckbereich
- 50: äußere Planfläche
- 52: innere Planfläche
- 54: Versteifungselement
- 56: Stegsegment
- 58: Durchgangsöffnungen
- 60: Versteifungselement
- 62: Stege
- 64: Flüssigkeitsbehälter
- 66: obere Halbschale
- 68: untere Halbschale
- 70: Verbindungsebene
- 72: Versteifungselement
- 74: plattenförmige Strebe
- 76: erster Steg
- 78: zweiter Steg
- 80: Durchgangsöffnung
- 82: Abschnitt
- 84: Planfläche
- D1: Abstand
- D2: Abstand
- r: Richtung
- h: Steghöhe
- a: Wanddicke, Stegdicke
- b: axiale Richtung
- c: Abstand
- d: Durchmesser
- E: Ebene
- L: Längsachse

## Patentansprüche

1. Versteifungselement für einen Flüssigkeitsbehälter für ein Kraftfahrzeug,
mit wenigstens einem Verbindungsabschnitt (4) zum Verbinden des Versteifungselements mit dem Flüssigkeitsbehälter (64), **dadurch gekennzeichnet, dass**
der Verbindungsabschnitt (4) wenigstens einen ersten und einen zweiten Steg (6, 8, 62, 76, 78) aus einem ersten Material aufweist, die von einem zweiten Material (10) zumindest abschnittsweise umschlossen sind,
wobei das zweite Material (10) Durchgangsöffnungen (12, 16, 18, 58, 80) der Stege (6, 8) durchdringt.

2. Versteifungselement nach Anspruch 1,
- wobei der erste Steg (6, 62) einen geringeren Abstand (D1) zu einer Längsachse (L) des Versteifungselements (2) aufweist als der zweite Steg (8, 62).

3. Versteifungselement nach einem der Ansprüche 1 oder 2,
- wobei die Stege (6, 8) zumindest abschnittsweise nach Art einer Doppelwandung angeordnet sind;
und/oder
- wobei der erste Steg (6) eine erste Hülse (6) und der zweite Steg (8) eine zweite Hülse (8) bildet und die zweite Hülse (8) die erste Hülse (6) umfangsseitig zumindest abschnittsweise einfasst;
und/oder
- wobei drei oder mehr Stege (6, 8, 62) vorgesehen sind.

4. Versteifungselement nach einem der Ansprüche 2 bis 3, wobei die Stege (6, 8, 62) in einem Schnitt quer zu der Längsachse (L) des Versteifungselements (2) betrachtet eine polygonale Form aufweisen, wie ein Pentagon, ein Hexagon oder dergleichen.

5. Versteifungselement nach einem der voranstehenden Ansprüche, wobei den Stegen (6, 8, 62) Entlüftungsöffnungen (36) zugeordnet sind.

6. Versteifungselement nach einem der Ansprüche 2 bis 5, wobei das Versteifungselement (2, 54, 60) eine entlang der Längsachse (L) des Versteifungselements (2) erstreckte Durchgangsöffnung (14) aufweist, die umfangsseitig zumindest abschnittsweise von dem ersten Steg (6, 62) und/oder dem zweiten Steg (6, 62) eingefasst ist.

7. Versteifungselement nach einem der Ansprüche 2 bis 6,
- wobei, ausgehend von der Längsachse (L) des Versteifungselements (2) in einer Richtung (r) quer zur Längsachse (L) des Versteifungselements (2) betrachtet, eine Durchgangsöffnung (12, 16, 58, 80) des ersten Stegs (6, 62, 76) zumindest abschnittsweise in einer Flucht mit einer Durchgangsöffnung (12, 18, 58, 80) des zweiten Stegs (8, 62, 78) angeordnet ist; und/oder
- wobei, in einer Richtung (r) quer zur Längsachse (L) des Versteifungselements (2) betrachtet, jede der Durchgangsöffnungen (12, 16) des ersten Stegs (6, 62, 76) in einer Flucht mit einer Durchgangsöffnung (12, 18, 58, 80) des zweiten Stegs (8, 62) angeordnet ist;
und/oder
- wobei Durchgangsöffnungen (12, 16, 18, 58, 80) an einem oder mehreren Stegen (6, 8, 62, 76) mehrreihig und/oder rasterartig angeordnet sind.

8. Versteifungselement nach einem der voranstehenden Ansprüche,
- wobei das zweite Material (10) die wenigstens zwei Stege (6, 8, 62, 76, 78) stirnseitig und umfangsseitig umschließt; und/oder
- wobei das Versteifungselement (2, 54, 60) aus zwei Halbschalen (20, 22) zusammengesetzt ist;
und/oder
- wobei an entgegengesetzten Enden (24, 26) des Versteifungselements (2, 54, 60) jeweils ein Verbindungsabschnitt (4) vorgesehen ist.

9. Versteifungselement nach einem der voranstehenden Ansprüche, wobei das erste Material ein PA, PAI, PEEK, PAEK, PPA, PBT, PE, HDPE, POM, PPS oder PA ist und/oder dass das zweite Material ein PA, PAI, PEEK, PAEK, PPA, PBT, PE, HDPE, POM, PPS oder PA ist.

10. Versteifungselement nach einem der voranstehenden Ansprüche,
- die Abzugskräfte zwischen dem ersten und dem zweiten Material größer oder gleich 15kN sind
und/oder
- die Zugfestigkeit des ersten Materials die Streckspannung des zweiten Materials um den Faktor 2,6 oder weniger übersteigt.

11. Versteifungselement nach einem der voranstehenden Ansprüche,
- wobei der erste Steg (6, 62, 76) und der zweite Steg (8, 62, 78) zumindest abschnittsweise einen konstanten Abstand (c) zueinander aufweisen
und/oder
- wobei der erste Steg (76) und/oder der zweite Steg (78) einen quader- oder plattenförmigen Abschnitt (82) haben und die Durchgangsöffnungen (80) in dem quader- oder plattenförmigen Abschnitt (82) angeordnet sind.

12. Versteifungselement nach einem der voranstehenden Ansprüche,
- wobei die Stege (6, 62, 76, 78) ausgehend von einem Mittelstück (28) gabelförmig verzweigt sind
und/oder
- wobei an einem ersten Ende (24) und einem dem ersten Ende (24) entgegengesetzten, zweiten Ende (26) des Versteifungselements (2, 54, 60, 72) jeweils ein Verbindungsabschnitt (4) vorgesehen ist und die Verbindungsabschnitte (4) über ein Mittelstück (28) miteinander verbunden sind.

13. Versteifungselement nach einem der voranstehenden Ansprüche,
- wobei das Versteifungselement ein Mittelstück (28) aufweist, das eine oder mehrere Streben (30) hat
und/oder
- wobei das Versteifungselement ein Mittelstück (28) aufweist, das eine Strebe (74) hat.

14. Versteifungselement nach einem der voranstehenden Ansprüche,
- wobei die Durchgangsöffnungen (12, 58, 80) einen axialen Versatz zueinander aufweisen.

15. Flüssigkeitsbehälter für ein Kraftfahrzeug,
- mit einem Versteifungselement (2, 54, 60, 72) nach einem der voranstehenden Ansprüche,
- wobei das Versteifungselement (2, 54, 60, 72) in einem Innenraum des Flüssigkeitsbehälters (64) angeordnet ist.

## Claims

1. A reinforcing element for a liquid container for a motor vehicle,
having at least one connecting section (4) for connecting the reinforcing element to the liquid container (64),
**characterized in that**
the connecting section (4) having at least a first and a second web (6, 8, 62, 76, 78) which are made from a first material and are enclosed at least in sections by a second material (10),
the second material (10) penetrating through openings (12, 16, 18, 58, 80) of the webs (6, 8).

2. The reinforcing element as claimed in claim 1,
- the first web (6, 62) being at a smaller spacing (D1) from a longitudinal axis (L) of the reinforcing element (2) than the second web (8, 62).

3. The reinforcing element as claimed in either of claims 1 and 2,
- the webs (6, 8) being arranged at least in sections in the manner of a double wall;
and/or
- the first web (6) forming a first sleeve (6) and the second web (8) forming a second sleeve (8), and the second sleeve (8) surrounding the first sleeve (6) on the circumferential side at least in sections;
and/or
- three or more webs (6, 8, 62) being provided.

4. The reinforcing element as claimed in either of claims 2 and 3, the webs (6, 8, 62) having a polygonal shape, such as a pentagon, a hexagon or the like, as viewed in a section transversely with respect to the longitudinal axis (L) of the reinforcing element (2).

5. The reinforcing element as claimed in one of the preceding claims, the webs (6, 8, 62) being assigned ventilating openings (36).

6. The reinforcing element as claimed in one of the claims 2 to 5, the reinforcing element (2, 54, 60) having a through opening (14) which extends along the longitudinal axis (L) of the reinforcing element (2) and is surrounded on the circumferential side at least in sections by the first web (6, 62) and/or the second web (6, 62).

7. The reinforcing element as claimed in one of the claims 2 to 6,
- a through opening (12, 16, 58, 80) of the first web (6, 62, 76) being arranged at least in sections in alignment with a through opening (12, 18, 58, 80) of the second web (8, 62, 78), as viewed, starting from the longitudinal axis (L) of the reinforcing element (2), in a direction (r) transversely with respect to the longitudinal axis (L) of the reinforcing element (2);
and/or
- each of the through openings (12, 16) of the first web (6, 62, 76) being arranged in alignment with a through opening (12, 18, 58, 80) of the second web (8, 62), as viewed in a direction (r) transversely with respect to the longitudinal direction (L) of the reinforcing element (2) ;
and/or
- through openings (12, 16, 18, 58, 80) being arranged in multiple rows and/or in a grid-like manner on one or more webs (6, 8, 62, 76).

8. The reinforcing element as claimed in one of the preceding claims,
- the second material (10) enclosing the at least two webs (6, 8, 62, 76, 78) on the end side and on the circumferential side;
and/or
- the reinforcing element (2, 54, 60) being assembled from two half shells (20, 22);
and/or
- in each case one connecting section (4) being provided at opposite ends (24, 26) of the reinforcing element (2, 54, 60).

9. The reinforcing element as claimed in one of the preceding claims, the first material being a PA, PAI, PEEK, PAEK, PPA, PBT, PE, HDPE, POM, PPS or PA, and/or in that the second material is a PA, PAI, PEEK, PAEK, PPA, PBT, PE, HDPE, POM, PPS or PA.

10. The reinforcing element as claimed in one of the preceding claims,
- the pull-off forces between the first and the second material being greater than or equal to 15 kN,
and/or
- the tensile strength of the first material exceeding the yield stress of the second material by the factor 2.6 or less.

11. The reinforcing element as claimed in one of the preceding claims,
- the first web (6, 62, 76) and the second web (8, 62, 78) being at a constant spacing (c) from one another at least in sections,
and/or
- the first web (76) and/or the second web (78) having a cuboid or plate-shaped section (82), and the through openings (80) being arranged in the cuboid or plate-shaped section (82).

12. The reinforcing element as claimed in one of the preceding claims,
- the webs (6, 62, 76, 78) being branched in a fork-like manner starting from a center piece (28),
and/or
- in each case one connecting section (4) being provided at a first end (24) and a second end (26) of the reinforcing element (2, 54, 60, 72), which second end (26) lies opposite the first end (24), and the connecting sections (4) being connected to one another via a center piece (28).

13. The reinforcing element as claimed in one of the preceding claims,
- the reinforcing element having a center piece (28) which has one or more struts (30),
and/or
- the reinforcing element having a center piece (28) which has one strut (74).

14. The reinforcing element as claimed in one of the preceding claims,
- the through openings (12, 58, 80) having an axial offset with respect to one another.

15. A liquid container for a motor vehicle,
- having a reinforcing element (2, 54, 60, 72) as claimed in one of the preceding claims,
- the reinforcing element (2, 54, 60, 72) being arranged in an interior space of the liquid container (64) .

## Revendications

1. Élément de renforcement pour un contenant à liquide destiné à un véhicule automobile, comprenant au moins une partie de liaison (4) destinée à relier l'élément de renforcement au contenant à liquide (64), **caractérisé en ce que**
la partie de liaison (4) comporte au moins un premier et un second éléments jointifs (6, 8, 62, 76, 78) constitués d'un premier matériau, lesquels sont entourés au moins en sections par un second matériau (10),
le second matériau (10) traversant des ouvertures de passage (12, 16, 18, 58, 80) des éléments jointifs (6, 8).

2. Élément de renforcement selon la revendication 1,
- dans lequel le premier élément jointif (6, 62) présente un écart (D1) par rapport à un axe longitudinal (L) de l'élément de renforcement (2) qui est plus petit que ledit écart par rapport au second élément jointif (8, 62).

3. Élément de renforcement selon l'une des revendications 1 ou 2,
- dans lequel les éléments jointifs (6, 8) sont disposés au moins en sections à la manière d'une double paroi ;
et/ou
- dans lequel le premier élément jointif (6) forme un premier manchon (6) et le second élément jointif (8) forme un second manchon (8) et le second manchon (8) entoure le premier manchon (6) au moins en sections sur la circonférence ; et/ou
- dans lequel trois éléments jointifs ou plus (6, 8, 62) sont prévus.

4. Élément de renforcement selon l'une des revendications 2 à 3, dans lequel les éléments jointifs (6, 8, 62) présentent une forme polygonale, telle qu'un pentagone, un hexagone ou analogue, vus transversalement à l'axe longitudinal (L) de l'élément de renforcement (2).

5. Élément de renforcement selon l'une des revendications précédentes, dans lequel les éléments jointifs (6, 8, 62) sont associés à des ouvertures de ventilation (36).

6. Élément de renforcement selon l'une des revendications 2 à 5, dans lequel l'élément de renforcement (2, 54, 60) comporte une ouverture de passage (14) qui s'étend le long de l'axe longitudinal (L) de l'élément de renforcement (2) et qui est enchâssée sur sa circonférence, au moins en sections, par le premier élément jointif (6, 62) et/ou par le second élément jointif (6, 62).

7. Élément de renforcement selon l'une des revendications 2 à 6,
- dans lequel, partant de l'axe longitudinal (L) de l'élément de renforcement (2) dans une direction (r) transversale à l'axe longitudinal (L) de l'élément de renforcement (2), une ouverture de passage (12, 16, 58, 80) du premier élément jointif (6, 62, 76) est disposée au moins en sections en alignement avec une ouverture de passage (12, 18, 58, 80) du second élément jointif (8, 62, 78) ;
et/ou
- dans lequel, vue dans une direction (r) transversale à l'axe longitudinal (L) de l'élément de renforcement (2), chacune des ouvertures de passage (12, 16) du premier élément jointif (6, 62, 76) est disposée en alignement avec une ouverture de passage (12, 18, 58, 80) du second élément jointif (8, 62) ;
et/ou
- dans lequel les ouvertures de passage (12, 16, 18, 58, 80) sont disposées au niveau d'un ou de plusieurs éléments jointifs (6, 8, 62, 76) en plusieurs rangées et/ou en forme de trame.

8. Élément de renforcement selon l'une des revendications précédentes,
- dans lequel le second matériau (10) entoure les au moins deux éléments jointifs (6, 8, 62, 76, 78) sur le côté frontal et sur la circonférence ;
et/ou
- dans lequel l'élément de renforcement (2, 54, 60) est composé de deux demi-coques (20, 22) ;
et/ou
- dans lequel une section de liaison (4) est respectivement prévue aux extrémités opposées (24, 26) de l'élément de renforcement (2, 54, 60).

9. Élément de renforcement selon l'une des revendications précédentes, dans lequel le premier matériau est du PA, du PAI, du PEEK, du PAEK, du PPA, du PBT, du PE, du HDPE, du POM, du PPS ou du PA et/ou dans lequel le second matériau est du PA, du PAI, du PEEK, du PAEK, du PPA, du PBT, du PE, du HDPE, du POM, du PPS ou du PA.

10. Élément de renforcement selon l'une des revendications précédentes,
- dans lequel les forces d'extraction entre le premier et le second matériau sont supérieures ou égales à 15 kN
et/ou
- dans lequel la résistance à la traction du premier matériau dépasse la limite d'élasticité du second matériau d'un facteur d'au plus 2,6.

11. Élément de renforcement selon l'une des revendications précédentes,
- dans lequel le premier élément jointif (6, 62, 76) et le second élément jointif (8, 62, 78) présentent au moins en sections une distance constante (c) l'un de l'autre et/ou
- dans lequel le premier élément jointif (76) et/ou le second élément jointif (78) comportent une section en forme de parallélépipède ou de plaque (82) et les ouvertures de passage (80) sont disposées dans la section en forme de parallélépipède ou de plaque (82).

12. Élément de renforcement selon l'une des revendications précédentes,
- dans lequel les éléments jointifs (6, 62, 76, 78) sont ramifiés sous la forme d'une fourche à partir d'une pièce centrale (28)
et/ou
- dans lequel, à une première extrémité (24) et à une seconde extrémité (26) opposée à la première extrémité (24) de l'élément de renforcement (2, 54, 60, 72), une section de liaison (4) est respectivement prévue et les sections de liaison (4) sont reliées par l'intermédiaire d'une pièce centrale (28).

13. Élément de renforcement selon l'une des revendications précédentes,
- dans lequel l'élément de renforcement comporte une pièce centrale (28) qui possède un ou plusieurs éléments jointifs (30)
et/ou
- dans lequel l'élément de renforcement comporte une pièce centrale (28) qui possède un élément jointif (74).

14. Élément de renforcement selon l'une des revendications précédentes,
- dans lequel les ouvertures de passage (12, 58, 80) présentent un décalage axiale les unes par rapport aux autres.

15. Contenant à liquide destiné à un véhicule automobile,
- comprenant un élément de renforcement (2, 54, 60, 72) selon l'une des revendications précédentes,
- dans lequel l'élément de renforcement (2, 54, 60, 72) est disposé à l'intérieur du contenant à liquide (64).
